# EUROPÄISCHE PATENTANMELDUNG

(11) **EP 3 770 935 A1**
(43) Veröffentlichungstag der Anmeldung: **27.01.2021**
(21) Anmeldenummer: 19188422.0
(22) Anmeldetag: 25.07.2019
(51) Int. Cl.: H01H 1/54, H01H 79/00, B60M 5/02

(54) **SPANNUNGSBEGRENZUNGSEINRICHTUNG MIT EINEM SCHALTGERÄT**

(71) Anmelder: Rail Power Systems GmbH, 81373 München (DE)
(72) Erfinder: BEUCHELT, Julian, 65817 Eppstein (DE)
(74) Vertreter: Oppermann, Frank

(57) **Zusammenfassung**

Die Erfindung betrifft eine Spannungsbegrenzungseinrichtung mit einem Schaltgerät 5, das einen beweglichen Schaltkontakt 16 aufweist, der zwischen einer geschlossenen Stellung und einer offenen Stellung bewegbar ist, wobei ein elektrischer Leiter 10 einen ersten Kabelanschluss 11 mit dem Schaltgerät und ein elektrischer Leiter 12 einen zweiten Kabelanschluss 13 mit dem Schaltgerät elektrisch verbindet. Die erfindungsgemäße Spannungsbegrenzungseinrichtung zeichnet sich durch eine besondere Anordnung und Ausbildung eines Leiterabschnitts einer der beiden elektrische Leiter 10, 12 aus. Ein Leiterabschnitt 10B, 12B eines elektrischen Leiters 10, 12 ist derart angeordnet bzw. ausgebildet, dass dieser Leiterabschnitt zusammen mit dem beweglichen Schaltkontakt 16 des Schaltgeräts 5 während des Betriebs des Schaltgeräts eine von entgegen gerichteten Strömen durchflossene Anordnung von Leitern bildet. Folglich wirken auf den beweglichen Leiter und den feststehenden Leiter elektrodynamische Kräfte, die derart gerichtet sind, dass sich die Leiter abstoßen. Die Schaltkontakte tendieren daher dazu, sich zu schließen. Die Spannungsbegrenzungseinrichtung kann höhere Lasten schalten, ohne dass die leitenden Teile verstärkt oder andere technische Maßnahmen getroffen werden müssten.

## Beschreibung

Die Erfindung betrifft eine Spannungsbegrenzungseinrichtung mit einem Schaltgerät, das einen beweglichen Schaltkontakt, der zwischen einer geschlossenen Stellung und einer offenen Stellung bewegbar ist, und einen ersten Kabelanschluss und einen zweiten Kabelanschluss aufweist, wobei ein erster elektrischer Leiter den ersten Kabelanschluss mit dem Schaltgerät und ein zweiter elektrischer Leiter den zweiten Kabelanschluss mit dem Schaltgerät elektrisch verbindet.

Im Bereich der Bahnenergieversorgung, insbesondere im Bereich der mit Gleichstrom betriebenen Bahnen, finden Spannungsbegrenzungseinrichtungen (VLD (Voltage Limiting Device) Anwendung. Bei gleichstrombetriebenen Bahnen wird die Fahrschiene häufig als Rückleiter für den Fahrstrom benutzt, wobei die Fahrschiene gegen das Erdreich isoliert ist, um das Auftreten von Streuströmen zu verhindern. Der durch die Fahrschiene fließende Rückstrom führt aufgrund des elektrischen Widerstands der Schiene zu einer Potentialdifferenz gegenüber der Erde, die als eine Spannung zwischen Schiene und Erde abgegriffen werden kann. Zur Vermeidung unzulässiger Berührungsspannungen, die im Betrieb oder Fehlerfall auftreten können, sind Spannungsbegrenzungseinrichtungen vorgeschrieben. Die Spannungsbegrenzungseinrichtung ist ein selbständig rückstellbarer Erdungskurzschließer, der im Allgemeinen zwischen der Fahrschiene und der Erdungsanlage eingebaut wird und bei einem definierten Schwellwert für die Berührungsspannung anspricht.

Die bekannten Spannungsbegrenzungseinrichtungen verfügen über ein Schaltgerät, das eine elektrische Verbindung zwischen zwei Kabelanschlüssen herstellt. Je nach Bauart weist das Schaltgerät einen einpoligen oder mehrpoligen Schaltschütz auf, der einen feststehenden und einen beweglichen Schaltkontakt hat, der von einer Betätigungseinheit betätigt wird. Das Schaltgerät kann auch einen parallel geschalteten Thyristor umfassen.

Bei den bekannten Schaltschützen liegen sich die Kontaktflächen des feststehenden Schaltkontakts und des beweglichen Schaltkontakts im Allgemeinen einander gegenüber. Ein unbeweglicher Leiter verbindet den feststehenden Schaltkontakt mit einem ersten Geräteanschluss und ein beweglicher Leiter verbindet den beweglichen Schaltkontakt mit einem zweiten Geräteanschluss. Bei diesen Anordnungen von Schaltkontakten und Leitern, die für häufiges Schalten konzipiert sind, treten elektrodynamischen Kräfte auf, die auf die Schaltkontakte wirken. Diese Kräfte sind derart gerichtet, dass die Schaltkontakte dazu tendieren, geöffnet zu werden.

In bestimmten Anwendungsfällen muss das Schaltschütz sehr oft und/oder sehr schnell schalten können und auch hohe Ströme einschalten und für eine gewisse Zeit führen können. Wenn die Stromstärke zu hoch wird, müssen technische Maßnahmen ergriffen werden, um eine Zerstörung des Schützes beim Einschalten zu verhindern.

Eine bekannte technische Maßnahme bei Spannungsbegrenzungseinrichtungen liegt darin, das Schaltschütz zusammen mit Thyristoren zu betreiben, die in Abhängigkeit von dem Schalten des Schützes gezündet werden. Die Thyristoren können in einigen Mikrosekunden schalten, während das Schütz eine Schließzeit hat, die zwischen 100 bis 200 ms liegen kann. Nachdem die Thyristoren gezündet haben, kann das Schütz die Last übernehmen. Zur Ansteuerung des Schaltschützes bzw. der Thyristoren ist ein Steuergerät vorgesehen. Sämtliche Komponenten befinden sich üblicherweise in einem Schaltschrank.

Der Erfindung liegt die Aufgabe zugrunde, eine Spannungsbegrenzungseinrichtung zu schaffen, die höhere Schaltleistungen beim Einschalten und das kurzzeitige Führen eines hohen Stroms ermöglicht.

Die Lösung dieser Aufgabe erfolgt erfindungsgemäß mit den Merkmalen des Patentanspruchs 1. Die Gegenstände der abhängigen Ansprüche betreffen vorteilhafte Ausführungsformen der Erfindung.

Die erfindungsgemäße Spannungsbegrenzungseinrichtung verfügt über ein Schaltgerät, mit dem eine elektrische Verbindung zwischen einem ersten Kabelanschluss und einem zweiten Kabelanschluss herstellbar ist, wobei ein erster elektrischer Leiter den ersten Kabelanschluss und ein zweiter elektrischer Leiter den zweiten Kabelanschluss mit dem Schaltgerät elektrisch verbindet. An dem Schaltgerät können entsprechende Geräteanschlüsse oder elektrische Anschlussflächen vorgesehen sein. Die beiden elektrischen Leiter können jeweils mehrere leitende Teile aufweisen. In dem jeweiligen Strompfad können noch weitere elektrische Bauteile vorgesehen sein.

Die erfindungsgemäße Spannungsbegrenzungseinrichtung zeichnet sich durch eine besondere Anordnung und Ausbildung eines Leiterabschnitts des ersten oder zweiten elektrischen Leiters aus, der den ersten bzw. zweiten Kabelanschluss mit dem Schaltgerät elektrisch verbindet. Ein Leiterabschnitt des ersten oder zweiten elektrischen Leiters ist derart angeordnet bzw. ausgebildet, dass dieser Leiterabschnitt zusammen mit dem beweglichen Schaltkontakt des Schaltgeräts während des Betriebs des Schaltgeräts eine von entgegen gerichteten Strömen durchflossene Anordnung von Leitern bildet.

Die Spannungsbegrenzungseinrichtung zeichnet sich im Speziellen dadurch aus, dass ein Leiterabschnitt des ersten oder zweiten elektrischen Leiters in einer im Wesentlichen parallelen Ausrichtung zu dem beweglichen Schaltkontakt vor dem beweglichen Schaltkontakt in einem Bereich angeordnet ist, in dem sich der bewegliche Schaltkontakt bei einer Bewegung von der offenen Stellung in die geschlossene Stellung von dem Leiterabschnitt wegbewegt. Die Spannungsbegrenzungseinrichtung ist somit derart ausgebildet bzw. kann somit derart betrieben werden, dass der bewegliche Schaltkontakt und ein Leiterabschnitt des ersten oder zweiten Leiters eine Anordnung von parallelen Leitern bilden, die von entgegengesetzt gerichteten Strömen durchflossen werden. Der Stromfluss führt dazu, dass auf den beweglichen Schaltkontakt (Leiter) und den feststehenden Leiter (Strombahn) elektrodynamische Kräfte wirken, die derart gerichtet sind, dass sich die Leiter abstoßen. Da der Leiterabschnitt des ersten bzw. Leiters vor dem beweglichen Leiter derart angeordnet ist, dass sich der bewegliche Schaltkontakt bei einer Bewegung von der offenen Stellung in die geschlossene Stellung von dem Leiterabschnitt wegbewegt, tendieren die Schaltkontakte dazu, sich zu schließen. Es hat sich gezeigt, dass dadurch die von dem Schaltgerät aufzubringenden Kräfte zum Schließen des Schaltkontaktes verringert und die leitendenden Teile (Schaltkontakte) entlastet werden. Dadurch werden die elektrischen Eigenschaften der Spannungsbegrenzungseinrichtung verbessert. Die Spannungsbegrenzungseinrichtung kann höhere Lasten schalten, ohne dass die leitenden Teile verstärkt oder andere technische Maßnahmen getroffen werden müssten.

Die Erfindung betrifft insbesondere die Anordnung und Ausbildung der Anschlussleitungen des Schaltgeräts. Für diesen Aspekt der Erfindung ist die Ausbildung des Schaltgeräts grundsätzlich unerheblich, soweit das Schaltgerät einen beweglichen Schaltkontakt aufweist, der mit einer der beiden Anschlussleitungen zusammenwirkt.

Bei einer bevorzugten Ausführungsform verfügt das Schaltgerät über einen ersten und zweiten feststehenden Schaltkontakt und einen beweglichen Schaltkontakt. Wenn von einem Schaltkontakt die Rede ist, wird darunter nicht verstanden, dass nur ein Schaltkontakt vorgesehen sein muss. Vielmehr kann das erfindungsgemäße Schaltgerät auch mehrere feststehende oder bewegliche Schaltkontakte aufweisen. Beispielsweise kann das Schaltgerät mehrere Baugruppen umfassen, die jeweils einen ersten und zweiten feststehenden Schaltkontakt und einen beweglichen Schaltkontakt aufweisen. Diese Baugruppen können separat betrieben werden, um mehrere Ströme zu schalten oder die Baugruppen können parallelgeschaltet werden.

Bei einer bevorzugten Ausführungsform liegen in der geschlossenen Stellung der vor dem beweglichen Schaltkontakt in einer im Wesentlichen parallelen Ausrichtung zu dem beweglichen Schaltkontakt angeordnete Leiterabschnitt des ersten oder zweiten elektrischen Leiters und der bewegliche Schaltkontakt in einer Ebene. Der Leiterabschnitt des ersten oder zweiten Leiters und der bewegliche Schaltkontakt brauchen aber nicht exakt zueinander ausgerichtet zu sein, d.h. die Leiter können auch in leicht zueinander versetzten Ebenen liegen.

Der vor dem beweglichen Schaltkontakt in einer parallelen Ausrichtung zu dem beweglichen Schaltkontakt angeordnete Leiterabschnitt kann grundsätzlich beliebig ausgebildet sein, d.h. einen beliebigen Querschnitt und eine beliebige Länge haben, solange dieser Leiterabschnitt und der bewegliche Schaltkontakt eine von entgegen gerichteten Strömen durchflossene Anordnung von parallelen Leitern bilden, die sich abstoßen.

Die Stärke der elektrodynamischen Kräfte ist von der Stromstärke abhängig, von der auch die Dimensionierung der Leiter abhängt.

Bei einer bevorzugten Ausführungsform ist der vor dem beweglichen Schaltkontakt in einer im Wesentlichen parallelen Ausrichtung zu dem beweglichen Schaltkontakt angeordnete Leiterabschnitt des ersten oder zweiten elektrischen Leiters ein geradliniger elektrischer Leiterabschnitt, der vorzugsweise einen rechteckförmigen Querschnitt hat. Der Leiterabschnitt ist vorzugsweise derart angeordnet ist, dass dessen Breitseite dem beweglichen Schaltkontakt zugewandt ist.

Die Richtung des Stromflusses durch den ersten oder zweiten Leiter ist von dem Potential abhängig, das an dem ersten bzw. zweiten Kabelanschluss anliegt, d.h. ob der erste oder zweite Kabelanschluss auf Erdpotential liegt.

Der vor dem beweglichen Schaltkontakt in einer im Wesentlichen parallelen Ausrichtung zu dem beweglichen Schaltkontakt angeordnete Leiterabschnitt des ersten oder zweiten elektrischen Leiters weist einen dem ersten feststehenden Schaltkontakt zugewandten ersten Endabschnitt und einen dem zweiten feststehenden Schaltkontakt zugewandten zweiten Endabschnitt auf.

Eine Ausführungsform sieht vor, dass der erste elektrische Leiter einen Leiterabschnitt aufweist, der sich von dem ersten Kabelanschluss zu dem zweiten Endabschnitt des vor dem beweglichen Schaltkontakt in einer parallelen Ausrichtung zu dem beweglichen Schaltkontakt angeordneten Leiterabschnitts des ersten elektrischen Leiters erstreckt, und der erste elektrische Leiter einen Leiterabschnitt aufweist, der sich von dem ersten Endabschnitt des vor dem beweglichen Schaltkontakt in einer parallelen Ausrichtung zu dem beweglichen Schaltkontakt angeordneten Leiterabschnitts des ersten elektrischen Leiters, zu dem Schaltgerät erstreckt. Bei dieser Ausführungsform erstreckt sich der zweite elektrische Leiter von dem Schaltgerät zu dem zweiten Kabelanschluss.

Bei einer alternativen Ausführungsform erstreckt sich der erste elektrische Leiter von dem ersten Kabelanschuss zu dem Schaltgerät. Der zweite elektrische Leiter weist einen Leiterabschnitt auf, der sich von dem Schaltgerät zu dem zweiten Endabschnitt des vor dem beweglichen Schaltkontakt in einer parallelen Ausrichtung zu dem beweglichen Schaltkontakt angeordneten Leiterabschnitts des zweiten elektrischen Leiters erstreckt, und der zweite elektrische Leiter weist einen Leiterabschnitt auf, der sich von dem ersten Endabschnitt des vor dem beweglichen Schaltkontakt in einer parallelen Ausrichtung zu dem beweglichen Schaltkontakt angeordneten Leiterabschnitts des zweiten elektrischen Leiters zu dem zweiten Kabelanschluss erstreckt.

Bei beiden Ausführungsformen werden der Leiterabschnitt des ersten bzw. zweiten Leiters und der bewegliche Schaltkontakt von Strömen durchflossen, die in unterschiedlichen Richtungen fließen.

Neben den obigen Ausführungsbeispielen sind aber auch weitere Ausführungsformen möglich, bei denen der erste und zweite Leiter derart angeschlossen sind, dass der Strom von dem zweiten feststehenden Schaltkontakt über den beweglichen Schaltkontakt zu dem ersten feststehenden Schaltkontakt fließt.

Ein weiterer Aspekt der Erfindung betrifft die Ausbildung und Anordnung der Schaltkontakte des Schaltgeräts. Eine bevorzugte Ausführungsform des Schaltgeräts sieht vor, dass der erste und zweite feststehende Schaltkontakt derart angeordnet sind, dass deren Kontaktflächen in die gleiche Richtung weisen. Der bewegliche Schaltkontakt kann zwischen einer geschlossenen Stellung, in der der erste und zweite feststehende Schaltkontakt elektrisch miteinander verbunden sind, und einer offenen Stellung, in der der erste und zweite feststehende Schaltkontakt voneinander getrennt sind, bewegt werden. Der erste und zweite feststehende Schaltkontakt und der bewegliche Schaltkontakt bilden eine Anordnung von elektrischen Leitern, die im Wesentlichen parallel zueinander angeordnet sind.

Bei dieser Anordnung von Schaltkontakten ist von besonderer Bedeutung, dass die Kontaktfläche zumindest einer der feststehenden Schaltkontakte eine langgestreckte Kontaktfläche ist, die sich in Stromflussrichtung erstreckt. Vorzugsweise sind die Kontaktflächen beider feststehenden Schaltkontakte langgestreckte Kontaktflächen. In diesem Zusammenhang wird unter einer langgestreckten Kontaktfläche eine Kontaktfläche verstanden, die in Stromflussrichtung eine Länge hat, die auf jeden Fall größer als die Breite der Kontaktfläche ist. Die Kontaktfläche zumindest einer der feststehenden Schaltkontakte hat vorzugsweise in Stromflussrichtung eine Länge, die mindestens doppelt so lang wie die Breite der Kontaktfläche ist. Die Kontaktfläche sollte in Bezug auf deren Breite möglichst lang sein. Die Stromflussrichtung ist als die Richtung definiert, in der der Strom von dem einen feststehenden Schaltkontakt über den beweglichen Schaltkontakt zu dem anderen feststehenden Schaltkontakt fließt. Folglich bildet die Anordnung von Schaltkontakten eine langgestreckte Leiteranordnung.

Das Schaltgerät ist somit derart ausgebildet bzw. kann somit derart betrieben werden, dass die feststehenden Schaltkontakte und der bewegliche Schaltkontakt, der mit den feststehenden Schaltkontakten kontaktiert, von gleich gerichteten Strömen durchflossen werden. Der Stromfluss führt dazu, dass auf die feststehenden Leiter und den beweglichen Leiter elektrodynamische Kräfte wirken, die derart gerichtet sind, dass sich die Leiter anziehen, d.h. die Schaltkontakte dazu tendieren, sich zu schließen. Es hat sich gezeigt, dass dadurch die auf die leitenden Teile des Schaltgeräts, insbesondere dessen Schaltkontakte, öffnend wirkende Kraft verringert und die Schaltkontakte entlastet werden. Dadurch werden die elektrischen Eigenschaften des Schaltgeräts verbessert. Das Schaltgerät kann höhere Lasten schalten, ohne dass die Kontakte des Schaltgeräts verstärkt oder andere technische Maßnahmen getroffen werden müssten. Dieser Effekt verstärkt noch den oben beschriebenen Effekt, der auf die besondere Anordnung und Ausbildung der zu dem Schaltgerät führenden Leiter zurückzuführen ist.

Die besondere Anordnung und Ausbildung der Schaltkontakte unterscheidet das erfindungsgemäße Schaltgerät von der Anordnung und Ausbildung der Schaltkontakte marktüblicher Schaltgeräte, deren Schaltkontakte bzw. Kontaktflächen meist punktförmig, quadratisch oder rechteckig sind, wobei die rechteckigen Kontakte in Stromflussrichtung breit und kurz sind.

Der erste und zweite feststehende Schaltkontakt sowie der bewegliche Schaltkontakt können grundsätzlich beliebig ausgebildet sein, d.h. einen beliebigen Querschnitt und eine beliebige Länge haben, solange die Schaltkontakte eine von gleich gerichteten Strömen durchflossene Anordnung von im Wesentlichen parallelen Leitern bilden, die sich anziehen. Die Stärke der elektrodynamischen Kräfte hängt von der Stromstärke ab.

Eine bevorzugte Ausführungsform des Schaltgeräts sieht vor, dass der erste und zweite feststehende Schaltkontakt geradlinige elektrische Leiter sind, die einen rechteckförmigen Querschnitt haben. Die Schaltkontakte können aber beispielsweise auch einen elliptischen oder runden Querschnitt haben. Bei einem rechteckförmigen Querschnitt ist von Vorteil, wenn der erste und zweite feststehende Schaltkontakt derart angeordnet sind, dass deren Breitseiten die Kontaktflächen bilden. Die feststehenden Schaltkontakte sind daher vorzugsweise kurze flache Schienen. Der bewegliche Schaltkontakt ist ebenfalls vorzugsweise ein geradliniger elektrische Leiter, der einen rechteckförmigen Querschnitt hat, wobei dessen Breitseite vorzugsweise die Kontaktfläche bildet. Folglich liegen sich die Schaltkontakte mit den Breitseiten einander gegenüber.

Der Bereich, in dem sich die beweglichen Schaltkontakte und der feststehende Schaltkontakt einander gegenüberliegen, sollte möglichst groß sein, so dass die resultierenden elektrodynamischen Kräfte groß sind. Dies wird insbesondere dann erreicht, wenn die Länge des beweglichen Schaltkontakts größer oder gleich der Summe der Längen des ersten und zweiten feststehenden Schaltkontakts und des Abstands zwischen dem ersten und zweiten feststehenden Schaltkontakt ist. Folglich erstreckt sich der bewegliche Schaltkontakt über die gesamte zur Verfügung stehende Länge der feststehenden Kontakte.

Bei einer weiteren bevorzugten Ausführungsform ist der bewegliche Schaltkontakt zwischen der geschlossenen Stellung und der offenen Stellung um eine Achse schwenkbar, die parallel zu den Längsachsen des ersten und zweiten feststehenden Schaltkontakts verläuft. Der bewegliche Schaltkontakt kann aber auch eine andere Bewegung als eine rotatorische Bewegung, beispielsweise eine lineare Bewegung, ausüben.

Die Betätigung des beweglichen Schaltkontakts kann mit einer Betätigungseinheit erfolgen, die unterschiedlich ausgebildet sein kann. Die Betätigungseinheit kann beispielsweise eine elektromagnetische Betätigungseinheit sein.

Die Spannungsbegrenzungseinrichtung kann in einem konventionellen Schaltschrank angeordnet werden, der eine Vorderseite und eine Rückseite, ein linkes Seitenteil und rechtes Seitenteil und ein Deckelteil und ein Bodenteil aufweisen kann. Der Schaltschrank kann noch weitere aus dem Stand der Technik bekannte Komponenten einer Spannungsbegrenzungseinrichtung aufnehmen, beispielsweise eine Steuereinheit für die Betätigungseinheit.

Nachfolgend werden Ausführungsbeispiele der erfindungsgenmäßen Spannungsbegrenzungseinrichtung unter Bezugnahme auf die Zeichnungen im Einzelnen erläutert.

Es zeigen:
- Fig. 1: ein Schienenfahrzeug und eine Spannungsbegrenzungseinrichtung in stark vereinfachter schematischer Darstellung,
- Fig. 2: eine stark vereinfachte schematische Darstellung der wesentlichen Komponenten der Spannungsbegrenzungseinrichtung, die über das erfindungsgemäße Schaltgerät verfügt,
- Fig. 3: einen Schaltschrank mit der Spannungsbegrenzungseinrichtung.
- Fig. 4: ein Ausführungsbeispiel des Schaltgeräts mit den feststehenden Schaltkontakten und dem beweglichen Schaltkontakt sowie der Betätigungseinheit in der Draufsicht,
- Fig. 5: einen Schnitt entlang der Linie A-A von Fig. 4,
- Fig. 6: die Anordnung der feststehenden Schaltkontakte und des beweglichen Schaltkontakts des Schaltgeräts sowie der zu den Geräteanschlüssen des Schaltgeräts führenden Leiter in schematischer Darstellung,
- Fig. 7: eine alternative Ausführungsform der Anordnung der feststehenden Schaltkontakte und des beweglichen Schaltkontakts des Schaltgeräts sowie der zu den Geräteanschlüssen des Schaltgeräts führenden Leiter in schematischer Darstellung, und
- Fig. 8: eine stark vereinfachte schematische Darstellung der Schaltkontakte.

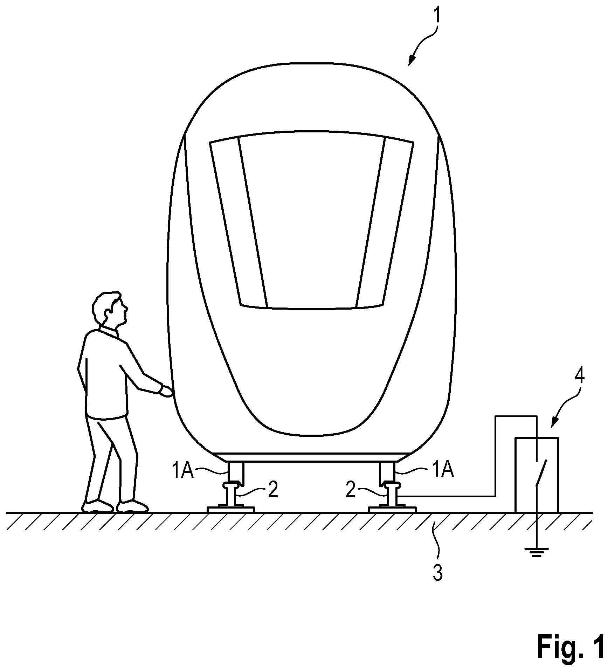

Fig. 1 zeigt ein gleichstrombetriebenes Schienenfahrzeug zusammen mit einer Spannungsbegrenzungseinrichtung. Das Schienenfahrzeug 1 weist Räder 1A auf, die auf einer Fahrschiene 2 laufen. Die Fahrschiene 2 der Bahnanlage ist gegenüber dem Erdreich 3 isoliert. Der elektrische Widerstand der Fahrschiene 2 führt zu dem Auftreten einer Potentialdifferenz zwischen dem Schienenfahrzeug 1 bzw. der Schiene 2 und dem Erdreich 3. Die Spannungsbegrenzungseinrichtung 4 verhindert das Auftreten von unzulässigen Berührungsspannungen während des normalen Bahnbetriebs oder in einem Fehlerfall (Kurzschluss). Die Spannungsbegrenzungseinrichtung 4 ist zwischen der Fahrschiene 2 und der Erdungsanlage eingebaut und kann eine elektrische Verbindung zwischen der Fahrschiene 2 und Erde 3 herstellen (Erdungskurzschließer).

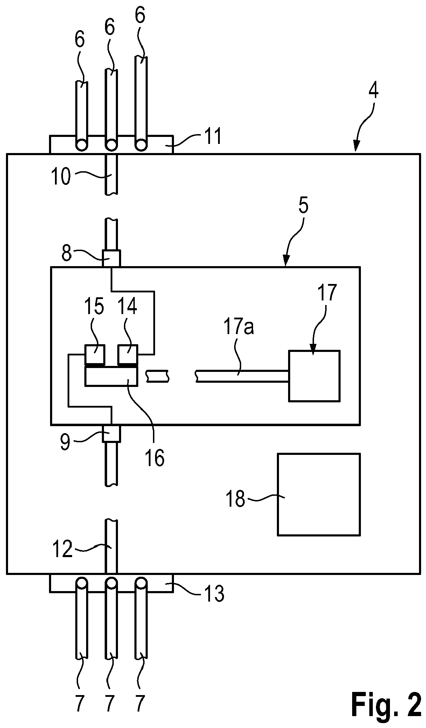

Fig. 2 zeigt die für die Erfindung wesentlichen Komponenten der Spannungsbegrenzungseinrichtung 4 in einer stark vereinfachten schematischen Darstellung. Die Spannungsbegrenzungseinrichtung 4 verfügt über das erfindungsgemäße Schaltgerät 5, um eine elektrische Verbindung zwischen einem oder mehreren Kabeln 6, die zu einem nicht dargestellten Bauteil oder einer Baugruppe der Bahnenergieversorgungsanlage, beispielsweise einem Gleis, führen und einem oder mehreren Kabeln 7, die mit einer nicht dargestellten Erdungsanlage oder auch einem weiteren Gleis verbunden sein können, herzustellen. Bei dem vorliegenden Ausführungsbeispiel ist das Schaltgerät ein Gleichstrom-Schaltgerät.

Das erfindungsgemäße Schaltgerät 5 weist einen ersten Geräteanschluss 8 und einen zweiten Geräteanschluss 9 auf. Der erste Geräteanschluss 8 ist mit einem ersten elektrischen Leiter 10 mit einem ersten Kabelanschluss 11 elektrisch verbunden und der zweite Geräteanschluss 9 ist mit einem zweiten elektrischen Leiter 12 mit einem zweiten Kabelanschluss 13 elektrisch verbunden. An dem ersten Kabelanschluss 11 können ein oder mehrere Kabel 6 angeschlossen werden, die beispielsweise zu einem Gleis führen, und an dem zweiten Kabelanschluss 13 können ein oder mehrere Kabel 7 angeschlossen werden, die beispielsweise mit einer Erdungsanlage verbunden sind.

Das Schaltgerät 5 kann als ein konventioneller Schaltschütz aufgebaut sein, der zum Schalten von hohen Gleichströmen geeignet ist. Allerdings unterscheidet sich das erfindungsgemäße Schaltgerät von einem konventionellen Schaltschütz durch die besondere Anordnung und Ausbildung der Schaltkontakte. Das Schaltgerät 5 weist zwei feststehende Schaltkontakte 14, 15 und einen beweglichen Schaltkontakt 16 auf, deren besondere Anordnung nachfolgend noch im Einzelnen beschrieben wird.

Das Schaltgerät 5 verfügt über eine elektromagnetische Betätigungseinheit 17, die eine Spule und einen Magnetanker umfassen kann, um eine Welle 17A zu betätigen, mit der der beweglicher Schaltkontakt 16 geöffnet bzw. geschlossen wird. Das Schaltgerät kann noch über weitere Bauteile, beispielsweise einen sogenannten Funkenkamin, verfügen, die zum Stand der Technik gehören.

Darüber hinaus verfügt die Spannungsbegrenzungseinrichtung 4 über eine Bedien- und Steuereinheit 18. Die Komponenten der Spannungsbegrenzungseinrichtung befinden sich in einem Schaltschrank.

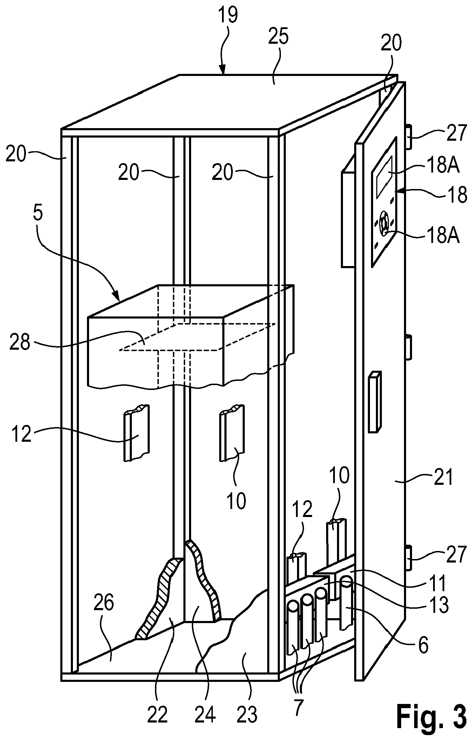

Fig. 3 zeigt eine Ansicht des Schaltschranks 19 in einer vereinfachten perspektivischen Darstellung. Der Schaltschrank 19 weist in der in Fig. 3 dargestellten Lage vier vertikale Profilstäbe 20 auf, an denen ein vorderes Teil 21, ein hinteres Teil 22 sowie ein linkes Seitenteil 23 und ein rechtes Seitenteil 24 und ein Deckelteil 25 und ein Bodenteil 26 befestigt sind. Das vordere Teil 21 ist eine schwenkbare Tür, die an seitlichen Scharnieren 27 auf der rechten Seite des Schaltschranks 19 befestigt ist.

Die Bedien- und Steuereinheit 18 befindet sich in der oberen Hälfte der Tür des Schaltschranks 19, so dass die Bedienelemente 18A von außen zugänglich sind. Das Schaltgerät 5 befindet sich im Inneren des Schaltschranks 19. In Fig. 3 ist das Schaltgerät 5 nur schematisch dargestellt. In der unteren Hälfte des Schaltschranks 19 befinden sich der erste und zweite Kabelanschluss 11 und 13. Die zu dem Schaltgerät 5 führenden Leiter 10, 12 sind nur andeutungsweise dargestellt.

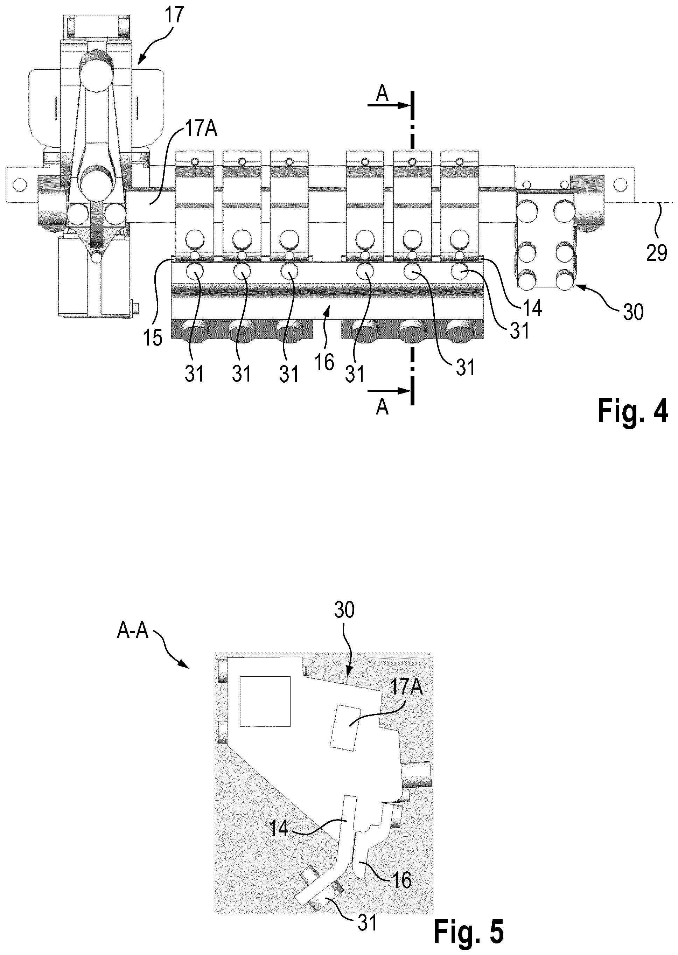

Die besondere Anordnung und Ausbildung der Schaltkontakte sowie der zu den Geräteanschlüssen des Schaltgeräts führenden Leiter wird nachfolgend unter Bezugnahme auf die Figuren 4 bis 8 beschrieben.

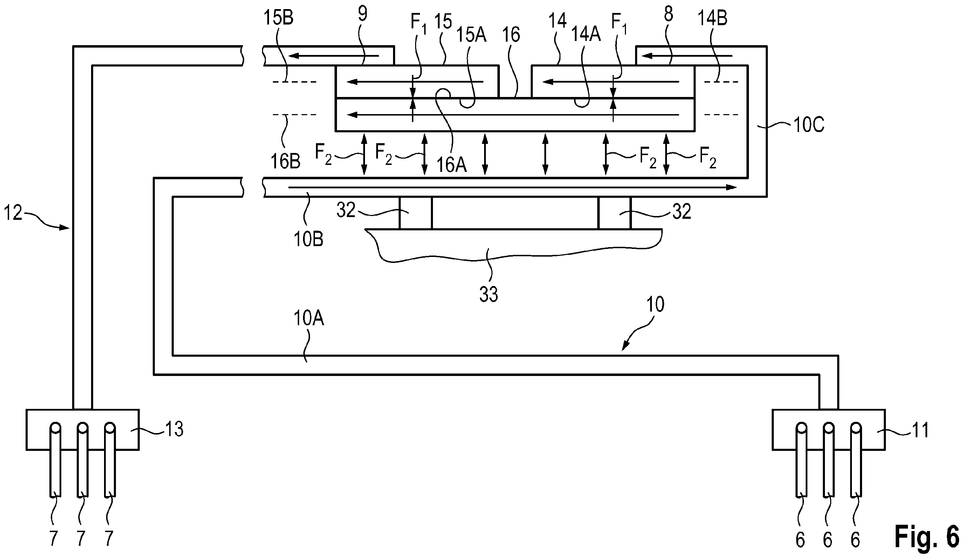

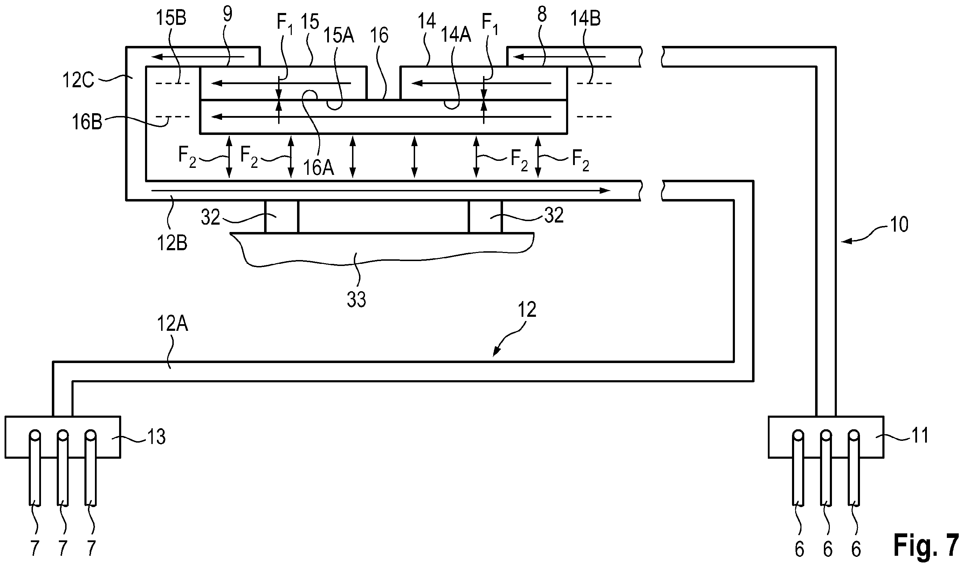

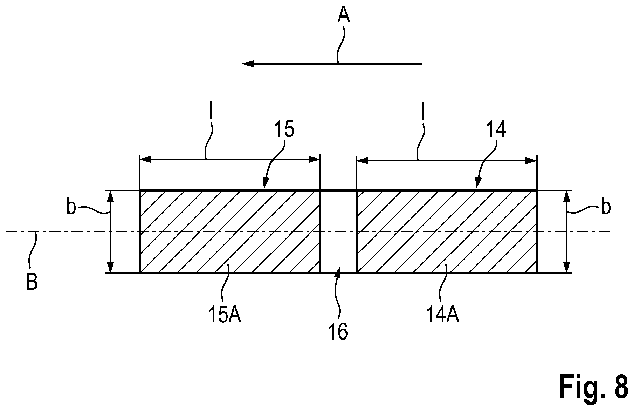

Die Figuren 4 und 5 zeigen die für die Erfindung wesentlichen Komponenten des Schaltgeräts im Detail, wobei Fig. 5 ein Schnitt entlang der Linie A-A ist. Die Figuren 6 und 7 sind vereinfachte schematische Darstellungen und Fig. 8 ist eine Prinzipskizze. In den Figuren 4 bis 8 sind die einander entsprechenden Teile mit den gleichen Bezugszeichen wie in Fig. 2 versehen.

Das Schaltgerät 5 weist bei dem vorliegenden Ausführungsbeispiel zwei feststehende Schaltkontakte 14, 15 und einen beweglichen Schaltkontakt 16 auf. Bei dem vorliegenden Ausführungsbeispiel haben die Schaltkontakte14 bis 16 einen im Wesentlichen rechteckförmigen Querschnitt. Die feststehenden Schaltkontakte 14, 15 sind flache Schienen aus einem leitenden Material, beispielsweise Kupfer, die im Abstand zueinander angeordnet sind. Die Kontaktflächen 14A, 15A, die sich an den Breitseiten der feststehenden Schaltkontakte befinden, zeigen in eine Richtung. Der bewegliche Schaltkontakt 16 ist ebenfalls eine flache Schiene aus einem leitenden Material, beispielsweise Kupfer, die einen im Wesentlichen rechteckförmigen Querschnitt hat. Die Kontaktfläche 16A des beweglichen Schaltkontakts 16 befindet sich an dessen Breitseite. Der bewegliche Schaltkontakt 16 ist in Bezug auf den ersten und zweiten feststehenden Schaltkontakt 14, 15 derart angeordnet, dass dessen Kontaktfläche 16A den Kontaktflächen 14A, 15A des ersten und zweiten feststehenden Schaltkontakts 14, 15 zugewandt ist. Der bewegliche Schaltkontakt 16 hat die gleiche Länge wie die Summe der Längen der feststehenden Schaltkontakte 14, 15 und des Abstandes zwischen den feststehenden Schaltkontakten. Die Längsachsen 14B, 15B der feststehenden Schaltkontakte 14, 15 und die Längsachse 16B des beweglichen Schaltkontakts 16 sind parallel. Die Schaltkontakte 14 bis 16 liegen in der gleichen Ebene bzw. auf gleicher Höhe.

Bei dem vorliegenden Ausführungsbeispiel ist das Schaltgerät 5 in dem Schaltschrank 19 derart angeordnet, dass die Schaltkontakte 14 bis 16 in Bezug auf den Schaltschrank in einer im Wesentlichen horizontalen Ebene 28 liegen, d.h. in dem Schaltschrank im Wesentlichen auf gleicher Höhe liegen, wobei die feststehenden Schaltkontakte 14, 15 dem hinteren Teil 22 des Schaltschranks und der bewegliche Schaltkontakt 16 dem vorderen Teil 21 des Schaltschranks zugewandt ist (Fig. 3). Die Schaltkontakte können aber auch in einer vertikalen Ebene angeordnet sein.

Die Figuren 4 und 5 zeigen die nebeneinander liegenden feststehenden Schaltkontakte 14, 15 und den in der vorliegenden Ansicht vor den feststehenden Schaltkontakten angeordneten beweglichen Schaltkontakt 16 im Detail. Der bewegliche Schaltkontakt 16 ist um eine horizontale Achse 29 schwenkbar, so dass der bewegliche Schaltkontakt zwischen einer geschlossenen Stellung, in der der erste und zweite feststehende Schaltkontakt 14, 15 elektrisch miteinander verbunden sind, und einer offenen Stellung bewegbar ist, in der der erste und zweite feststehende Schaltkontakt voneinander getrennt sind, bewegt werden kann.

Der bewegliche Schaltkontakt 16 wird von der Betätigungseinheit 17 betätigt, die neben den Schaltkontakten 14 bis 16, beispielsweise auf der linken Seite, angeordnet ist. Auf der anderen Seite der Schaltkontakte befindet sich ein Mechanismus 30, um den beweglichen Schaltkontakt 16 auf die feststehenden Schaltkontakte 14, 15 federnd vorzuspannen. Der besseren Übersichtlichkeit halber sind die elektrischen Verbindungen zu den Geräteanschlüssen 8, 9 sowie Teile der Mechanik nicht dargestellt. An den Schaltkontakten 14 bis 16 können noch Teile zur Befestigung der Kontakte vorgesehen sein, die einstückiger Bestandteil der Kontakte sein können. Der bewegliche Schaltkontakt 16 ist beispielsweise mittels Schrauben 31 mit nicht näher dargestellten Befestigungselementen verschraubt, die wiederum mit der Welle 17A der Betätigungseinheit 17 verbunden sind.

Der erste feststehende Schaltkontakt 14 ist mit dem ersten Leiter 10 und der zweite feststehende Schaltkontakt 15 ist mit dem zweiten Leiter 12 verbunden (Figuren 2 und 6). Bei dem vorliegenden Ausführungsbeispiel sind der erste und zweite Leiter 10, 12 flache Schienen aus einem leitenden Material, beispielsweise Kupfer. Die Leiter 10, 12 sind an Anschlussflächen 8, 9 angeschlossen, die an der den Kontaktflächen 14A, 15A gegenüberliegenden Seite der feststehenden Schaltkontakte 14, 15 vorgesehen sein können. Dieser Bereich stellt den Geräteanschluss 8, 9 des Schaltgeräts 5 dar.

Nachfolgend sei angenommen, dass während des Betriebs des Schaltgeräts 5 ein Strom von dem ersten Kabelanschluss 11 zu dem zweiten Kabelanschluss 13 fließt. Die Längsachsen 14B, 15B der feststehenden Schaltkontakte 14, 15 und die Längsachse 16B des beweglichen Schaltkontakts 16 sind parallel. Aufgrund des Stromflusses, der durch Pfeile gekennzeichnet ist, wirken auf die Schaltkontakte 14 bis 16 elektrodynamische Kräfte. Da die feststehenden Schaltkontakte 14, 15 und der bewegliche Schaltkontakt 16 von gleich gerichteten Strömen durchflossen werden, wirken auf die Schaltkontakte Kräfte F₁, die derart gerichtet sind, dass sich die Schaltkontakte anziehen. Die Kräfte F₁ sind in Fig. 6 mit Pfeilen gekennzeichnet. Infolge des Stromflusses wirken auf die Schaltkontakte größere Kräfte F₁, die dazu führen, dass die Kontaktkraft größer wird bzw. die zum Schließen des Schalters erforderlichen Kräfte kleiner werden. Dadurch werden die elektrisch leitenden Bauteile entlastet. Folglich kann das Schaltgerät bei der gleichen Dimensionierung wie ein konventionelles Schaltgerät höhere Ströme schalten und führen.

Fig. 8 zeigt eine stark vereinfachte schematische Darstellung der Schaltkontakte 14, 15, 16 in der Draufsicht. In der vorliegenden Darstellung sind der erste und zweite feststehende Schaltkontakt 14, 15 oberhalb des beweglichen Schaltkontakts 16 angeordnet. Der Strom fließt von dem ersten feststehenden Schaltkontakt 14 über den beweglichen Schaltkontakt 16 zu dem zweiten feststehenden Schaltkontakt 15. Die Stromflussrichtung ist mit A bezeichnet. Die Längsachsen der Schaltkontakte 14, 15, 16 sind mit B bezeichnet. Der Bereich, in dem die Kontaktfläche 14A bzw. 15B des jeweiligen feststehenden Schaltkontakts 14, 15 die Kontaktfläche 16A des beweglichen Schaltkontakts 16 berührt, d. h. der wirksame Kontaktbereich, ist mit einer Schraffur gekennzeichnet. Es zeigt sich, dass sich die Kontaktflächen bzw. die wirksamen Kontaktbereiche in Stromflussrichtung A erstrecken, d. h. eine Länge 1 haben, die größer als die Breite b ist. Die Kontaktflächen sind länger, vorzugsweise viel länger, als breit.

Der unterstützende Effekt einer höheren Anpresskraft am Schaltkontakt wird durch die besondere Anordnung und Ausbildung der Leiter 10 (Fig.6) oder 12 (Fig.7) erreicht. Fig. 6 zeigt ein Ausführungsbeispiel, bei dem ein Leiterabschnitt 10B des ersten Leiters 10 in einer parallelen Ausrichtung zu dem beweglichen Schaltkontakt 16 in einem Bereich vor dem beweglichen Schaltkontakt 16 derart angeordnet ist, dass sich der bewegliche Schaltkontakt bei einer Bewegung von der offenen Stellung in die in Fig. 6 gezeigte geschlossene Stellung von dem parallel geführten Leiterabschnitt 10B des ersten Leiters 10 wegbewegt.

Bei dem vorliegenden Ausführungsbeispiel ist der parallel geführte Leiterabschnitt 10B des ersten Leiters 10 in der gleichen horizontalen Ebene 28 wie die Schaltkontakte 14 bis 16 des Schaltgeräts angeordnet. Der parallel geführte Leiterabschnitt 10B, der vorzugsweise einen rechteckförmigen Querschnitt hat, kann eine flache Schiene aus einem leitenden Material, beispielsweise Kupfer, sein. Der Leiterabschnitt 10B und der bewegliche Schaltkontakt 16 liegen sich mit den Breitseiten einander gegenüber. Eine exakte parallele Ausrichtung der Breitseiten (Flächen) ist von Vorteil aber nicht erforderlich. Die flachen Leiter können auch leicht gegeneinander gekippt sein. Der Leiterabschnitt 10B sollte eine Länge haben, die mindestens so lang ist wie die Länge des beweglichen Schaltkontakts 16. Der Leiterabschnitt 10B ist mittels Isolatoren 32 fest mit Trägern 33 verbunden, die an den Pfosten 20 oder anderen Teilen des Schaltschranks 19 befestigt sein können. Die Befestigung der übrigen Leiterabschnitte des ersten Leiters 10 sowie die Befestigung des zweiten Leiters 12 sind nicht dargestellt.

Der erste Leiter 10 weist einen Leiterabschnitt 10A auf, der den ersten Kabelanschluss 11 mit dem Endabschnitt des parallel geführten Leiterabschnitts 10B des ersten Leiters elektrisch verbindet, der auf der Seite des zweiten feststehenden Schaltkontakts 15 liegt, und der erste Leiter10 weist einen Leiterabschnitt auf, der den Endabschnitt des parallel geführten Leiterabschnitts 10B des ersten Leiters 10, der auf der Seite des ersten feststehenden Schaltkontakts 14 liegt, mit dem ersten Geräteanschluss bzw. dem ersten Schaltkontakt 14 elektrisch verbindet. Der zweite Leiter 12 verbindet den zweiten Schaltkontakt 15 mit dem zweiten Kabelanschluss 13. Die Ströme in dem parallelen Leiterabschnitt 10B des ersten Leiters 10 und in dem beweglichen Schaltkontakt 16 fließen somit in einer entgegengesetzten Richtung. Bei einem Stromfluss stoßen sich der parallel geführte, feststehende Leiterabschnitt 10B und der bewegliche Schaltkontakt16 folglich ab. Dadurch wird eine Andruckkraft auf den beweglichen Schaltkontakt 16 ausgeübt, so dass die Kontaktkraft erhöht und das Abheben der Kontakte beim Schalten minimiert wird.

Fig. 7 zeigt eine alternative Ausführungsform, die sich von dem Ausführungsbeispiel der Fig. 6 nur durch den Anschluss des ersten und zweiten Leiters 10, 12 an die Kabelanschlüsse 11, 13 unterscheidet. Die einander entsprechenden Teile sind mit den gleichen Bezugsziffern bezeichnet. Bei der alternativen Ausführungsform weist nicht der erste Leiter 10, sondern der zweite Leiter 12 einen zu dem beweglichen Schaltkontakt 16 parallel geführten Leiterabschnitt 12B auf. Der zweite Leiter 12 weist einen Leiterabschnitt 12A auf, der den zweiten Kabelanschluss 13 mit dem Endabschnitt des parallel geführten Leiterabschnitts 12B des zweiten Leiters 12 elektrisch verbindet, der auf der Seite des ersten feststehenden Schaltkontakts 14 liegt, und der zweite Leiter 12 weist einen Leiterabschnitt 12C auf, der den Endabschnitt des parallel geführten Leiterabschnitts 12B, der auf der Seite des zweiten feststehenden Schaltkontakts 15 liegt, mit dem zweiten Geräteanschluss 9 bzw. dem zweiten Schaltkontakt 15 elektrisch verbindet. Die Ströme in dem parallel geführten Leiterabschnitt 12B und in dem beweglichen Schaltkontakt 16 fließen auch bei dieser Anordnung in entgegengesetzter Richtung. Folglich stoßen sich der parallele Leiterabschnitt 12B und der bewegliche Schaltkontakt 16 ab, wodurch auf den beweglichen Schaltkontakt 16 eine zusätzliche Andruckkraft ausgeübt wird.

Neben den obigen Ausführungsbeispielen sind aber auch weitere Ausführungsformen möglich, bei denen der erste und zweite Leiter 10, 12 derart angeschlossen sind, dass sich die Stromflussrichtung umdreht, d.h. der Strom von dem zweiten feststehenden Schaltkontakt 15 über den beweglichen Schaltkontakt 16 zu dem ersten feststehenden Schaltkontakt 14 fließt.

Der erste Leiter kann einen Leiterabschnitt aufweisen, der den ersten Kabelanschluss mit dem Endabschnitt des parallel geführten Leiterabschnitts des ersten Leiters elektrisch verbindet, der auf der Seite des ersten feststehenden Schaltkontakts liegt, und der erste Leiter kann einen Leiterabschnitt aufweisen, der den Endabschnitt des parallel geführten Leiterabschnitts des ersten Leiters, der auf der Seite des zweiten feststehenden Schaltkontakts liegt, mit dem zweiten Geräteanschluss bzw. dem zweiten Schaltkontakt elektrisch verbindet. Der zweite Leiter kann den ersten feststehenden Schaltkontakt mit dem zweiten Kabelanschluss verbinden. Die Ströme in dem parallelen Leiterabschnitt des ersten Leiters und in dem beweglichen Schaltkontakt fließen somit in einer entgegengesetzten Richtung. Folglich stoßen sich der parallel geführte Leiterabschnitt und der bewegliche Schaltkontakt bei einem Stromfluss ab.

Der erste Leiter kann auch den ersten Kabelanschluss mit dem zweiten feststehenden Schaltkontakt verbinden, wobei der zweite Leiter einen Leiterabschnitt aufweist, der den zweiten Kabelanschluss mit dem Endabschnitt des parallel geführten Leiterabschnitts des zweiten Leiters elektrisch verbindet, der auf der Seite des zweiten feststehenden Schaltkontakts liegt, und der zweite Leiter kann einen Leiterabschnitt aufweisen, der den Endabschnitt des parallel geführten Leiterabschnitts des zweiten Leiters, der auf der Seite des ersten feststehenden Schaltkontakts liegt, mit dem ersten feststehenden Schaltkontakt verbindet.

## Patentansprüche

1. Spannungsbegrenzungseinrichtung mit einem Schaltgerät, das einen beweglichen Schaltkontakt (16), der zwischen einer geschlossenen Stellung und einer offenen Stellung bewegbar ist, und einen ersten Kabelanschluss (11) und einen zweiten Kabelanschluss (13) aufweist, wobei ein erster elektrischer Leiter (10) den ersten Kabelanschluss (11) mit dem Schaltgerät (5) und ein zweiter elektrischer Leiter (12) den zweiten Kabelanschluss (13) mit dem Schaltgerät (5) elektrisch verbindet,
**dadurch gekennzeichnet, dass**
ein Leiterabschnitt (10B, 12B) des ersten oder zweiten elektrischen Leiters (10, 12) in einer im Wesentlichen parallelen Ausrichtung zu dem beweglichen Schaltkontakt (16) in einem Bereich vor dem beweglichen Schaltkontakt angeordnet ist, in dem sich der bewegliche Schaltkontakt (16) bei einer Bewegung von der offenen Stellung in die geschlossene Stellung von dem Leiterabschnitt (10B, 12B) wegbewegt, so dass während des Betriebs des Schaltgeräts der vor dem beweglichen Schaltkontakt (16) angeordnete Leiterabschnitt (10B, 12B) des ersten oder zweiten Leiters (10, 12) und der bewegliche Schaltkontakt (16) eine von entgegen gerichteten Strömen durchflossene Anordnung von Leitern bildet.

2. Spannungsbegrenzungseirichtung nach Anspruch 1, **dadurch gekennzeichnet, dass** das Schaltgerät (5) einen ersten und einen zweiten feststehenden Schaltkontakt (14, 15) aufweist, die derart nebeneinander angeordnet sind, dass deren Kontaktflächen (14A, 15A) in die gleiche Richtung weisen, und der bewegliche Schaltkontakt (16) in Bezug auf den ersten und zweiten feststehenden Schaltkontakt (14, 15) derart angeordnet ist, dass dessen Kontaktfläche (16A) den Kontaktflächen (14A, 15A) des ersten und zweiten Schaltkontakts (14, 15) zugewandt ist, wobei in der geschlossenen Stellung des beweglichen Schaltkontakts (16) der erste und zweite feststehende Schaltkontakt (14, 15) elektrisch miteinander verbunden sind, und in der offenen Stellung des beweglichen Schaltkontakts der erste und zweite feststehende Schaltkontakt (14, 15) voneinander getrennt sind.

3. Spannungsbegrenzungseinrichtung nach Anspruch 2, **dadurch gekennzeichnet, dass** die Kontaktfläche (14A, 15A) mindestens einer der feststehenden Schaltkontakte (14, 15) eine langgestreckte Kontaktfläche ist, die sich in Stromflussrichtung (A) erstreckt.

4. Spannungsbegrenzungseinrichtung nach einem der Ansprüche 1 bis 3, **dadurch gekennzeichnet, dass** in der geschlossenen Stellung des beweglichen Schaltkontakts (16) der vor dem beweglichen Schaltkontakt in einer im Wesentlichen parallelen Ausrichtung zu dem beweglichen Schaltkontakt angeordnete Leiterabschnitt (10B, 12B) des ersten oder zweiten elektrischen Leiters (10, 12) und der bewegliche Schaltkontakt (16) in einer Ebene liegen.

5. Spannungsbegrenzungseinrichtung einem der Ansprüche 1 bis 4, **dadurch gekennzeichnet, dass** der vor dem beweglichen Schaltkontakt (16) in einer im Wesentlichen parallelen Ausrichtung zu dem beweglichen Schaltkontakt (16) angeordnete Leiterabschnitt (10B, 12B) des ersten oder zweiten elektrischen Leiters (10, 12) ein geradliniger elektrische Leiterabschnitt ist, der einen rechteckförmigen Querschnitt hat.

6. Spannungsbegrenzungseinrichtung nach Anspruch 5, **dadurch gekennzeichnet, dass** der vor dem beweglichen Schaltkontakt (16) in einer im Wesentlichen parallelen Ausrichtung zu dem beweglichen Schaltkontakt (16) angeordnete Leiterabschnitt (10B, 12B) des ersten oder zweiten elektrischen Leiters (10, 12) derart angeordnet ist, dass dessen Breitseite dem beweglichen Schaltkontakt (16) zugewandt ist.

7. Spannungsbegrenzungseinrichtung nach einem der Ansprüche 1 bis 6, **dadurch gekennzeichnet**, der vor dem beweglichen Schaltkontakt (16) in einer im Wesentlichen parallelen Ausrichtung zu dem beweglichen Schaltkontakt (16) angeordnete Leiterabschnitt (10B, 12B) des ersten oder zweiten elektrischen Leiters (14, 15) einen dem ersten feststehenden Schaltkontakt (14) zugewandten ersten Endabschnitt und einen dem zweiten feststehenden Schaltkontakt (15) zugewandten zweiten Endabschnitt aufweist, wobei
der erste elektrische Leiter (10) einen Leiterabschnitt (10A) aufweist, der sich von dem ersten Kabelanschluss (11) zu dem zweiten Endabschnitt des vor dem beweglichen Schaltkontakt (16) in einer im Wesentlichen parallelen Ausrichtung zu dem beweglichen Schaltkontakt angeordneten Leiterabschnitts (10B) des ersten elektrischen Leiters (14) erstreckt, und einen Leiterabschnitt (10C) aufweist, der sich von dem ersten Endabschnitt des vor dem beweglichen Schaltkontakt (16) in einer parallelen Ausrichtung zu dem beweglichen Schaltkontakt angeordneten Leiterabschnitts (10B) des ersten elektrischen Leiters (10) zu dem Schaltgerät (5) erstreckt, und
der zweite elektrische Leiter (12) sich von dem Schaltgerät (5) zu dem zweiten Kabelanschluss (13) erstreckt,
oder
der erste elektrische Leiter (10) sich von dem ersten Kabelanschluss (11) zu dem Schaltgerät (5) erstreckt, und
der zweite elektrische Leiter (12) einen Leiterabschnitt (12C) aufweist, der sich von dem Schaltgerät (5) zu dem zweiten Endabschnitt des vor dem beweglichen Schaltkontakt(16) in einer parallelen Ausrichtung zu dem beweglichen Schaltkontakt angeordneten Leiterabschnitts (12B) des zweiten elektrischen Leiters (12) erstreckt, und einen Leiterabschnitt (12A) aufweist, der sich von dem ersten Endabschnitt des vor dem beweglichen Schaltkontakt (16) in einer parallelen Ausrichtung zu dem beweglichen Schaltkontakt angeordneten Leiterabschnitts (12B) des zweiten elektrischen Leiters (12) zu dem zweiten Kabelanschluss (13) erstreckt.

8. Spannungsbegrenzungseinrichtung nach einem der Ansprüche 2 bis 7, **dadurch gekennzeichnet, dass** der erste und zweite feststehende Schaltkontakt (14, 15) geradlinige elektrische Leiter sind, die einen rechteckförmigen Querschnitt haben.

9. Spannungsbegrenzungseinrichtung nach Anspruch 8, **dadurch gekennzeichnet, dass** der erste und zweite feststehende Schaltkontakt (14, 15) derart angeordnet sind, dass deren Breitseiten die Kontaktflächen (14A, 15A) bilden.

10. Spannungsbegrenzungseinrichtung nach einem der Ansprüche 1 bis 9, **dadurch gekennzeichnet, dass** der bewegliche Schaltkontakt (16) ein geradliniger elektrische Leiter ist, der einen rechteckförmigen Querschnitt hat.

11. Spannungsbegrenzungseinrichtung nach Anspruch 10, **dadurch gekennzeichnet, dass** der bewegliche Schaltkontakt (16) derart angeordnet ist, dass dessen Breitseite die Kontaktfläche (16A) bildet.

12. Spannungsbegrenzungseinrichtung nach einem der Ansprüche 2 bis 11, **dadurch gekennzeichnet, dass** die Länge des beweglichen Schaltkontakts (16A) größer oder gleich der Summe der Längen des ersten und zweiten feststehenden Schaltkontaktes (14, 15) und des Abstandes zwischen dem ersten und zweiten feststehenden Schaltkontakt (14, 15) ist.

13. Spannungsbegrenzungseinrichtung nach einem der Ansprüche 2 bis 12, **dadurch gekennzeichnet, dass** der bewegliche Schaltkontakt (16) zwischen der geschlossenen Stellung und der offenen Stellung um eine Achse (29) schwenkbar ist, die parallel zu den Längsachsen (14B, 15B) des ersten und zweiten feststehenden Schaltkontakts (14, 15) verläuft.

14. Spannungsbegrenzungseinrichtung nach einem der Ansprüche 1 bis 13, **dadurch gekennzeichnet, dass** das Schaltgerät (5) eine Betätigungseinheit (17) aufweist, die derart ausgebildet ist, dass der bewegliche Schaltkontakt (16) zwischen der geschlossenen Stellung und der offenen Stellung bewegbar ist.

15. Spannungsbegrenzungseinrichtung nach einem der Ansprüche 1 bis 14, **dadurch gekennzeichnet, dass** die Spannungsbegrenzungseinrichtung in einem Schaltschrank (19) angeordnet ist.
